# EUROPÄISCHE PATENTSCHRIFT

(11) **EP 0 793 308 B1**
(45) Veröffentlichungstag und Bekanntmachung des Hinweises auf die Patenterteilung: **05.06.2002**
(21) Anmeldenummer: 97103284.2
(22) Anmeldetag: 27.02.1997
(51) Int. Cl.: H01R 13/66, H01F 19/08, H02H 9/02

(54) **Leitungskoppler**
Line coupler
Coupleur de ligne

(30) Priorität: 01.03.1996 DE 19607971
(43) Veröffentlichungstag der Anmeldung: 03.09.1997
(73) Patentinhaber: W.L. GORE & ASSOCIATES GmbH, 85640 Putzbrunn (DE)
(72) Erfinder: Olsson, Stellan, 91781 Weissenburg (DE)
(74) Vertreter: Klunker . Schmitt-Nilson . Hirsch

(56) Entgegenhaltungen:
- EP-A- 0 297 865
- EP-A- 0 448 230
- EP-A- 0 482 973
- GB-A- 2 271 888

## Beschreibung

Die Erfindung betrifft einen Leitungskoppler gemäß Oberbegriff des Anspruchs 1, wie er aus der EP-A-0 297 865 bekannt ist, sowie eine mit mindestens einem solchen Leitungskoppler versehene Leitung. Bei dem Leitungskoppler kann es sich insbesondere um einen Datenbuskoppler handeln, mittels welchem Endgeräte oder andere Daten gebende und/oder Daten nehmende elektrische Einrichtungen an ein Bussystem anschließbar sind. Solche Bussysteme werden beispielsweise in Flugzeugen verwendet, wobei alle Endstellen über eine Busleitung und je einen Koppler miteinander fest verbunden sind.

Ein Beispiel eines Datenbuskopplers, der der EP-A-0 297 865 und dem Militärstandard MIL-STD-1553B entspricht, ist in Fig. 3 gezeigt. Dieser bekannte Datenbuskoppler umfaßt ein elektrisch abschirmendes Gehäuse 11, durch das ein Busleitungsstück 13 hindurchgeführt ist. Das Busleitungsstück 13 weist eine erste Busleitungsader 15 und eine zweite Busleitungsader 17 auf. An die beiden Enden des Busleitungsstücks 13 ist je ein in Fig. 3 schematisch angedeuteter Datenbusverbinder 19 bzw. 21 angeschlossen, über welchen das Busleitungsstück 13 mit einer in Fig. 3 nicht gezeigten Busleitung in lösbarer Weise verbunden werden kann. In dem Gehäuse 11 befindet sich außerdem ein Übertrager 23 mit einer Primärwicklung 25 und einer Sekundärwicklung 27. Die beiden Anschlüsse der Primärwicklung 25 sind über zwei Koppelwiderstände 29 und 31 mit der ersten Busleitungsader 15 bzw. der zweiten Busleitungsader 17 verbunden. Die beiden Anschlüsse der Sekundärwicklung 27 sind mit einem in Fig. 3 symbolisch dargestellten Abzweigleitungsverbinder 33 verbunden. Dieser ist aus dem Gehäuse 11 herausgeführt und dient zum Anschluß einer in Fig. 3 nicht dargestellten Abzweigleitung an die Sekundärwicklung 27 des Übertragers 23.

Ein Kopplergehäuse 11 kann mehrere Datenleitungskoppler mit je einem Kopplungswiderstandspaar und einem Übertrager umfassen. In Fig. 3 ist dies durch einen gestrichelt gezeichneten zweiten Datenbuskoppler angedeutet.

Die Koppelwiderstände 29 und 31 sind vorgesehen, um die beiden Busleitungsadern 15 und 17 vor einem direkten Kurzschluß zu schützen. Diese zwischen die beiden Busleitungsadern 15 und 17 geschaltete Reihenschaltung aus den beiden Koppelwiderständen 29, 31 und der Primärwicklung 25 stellt für die Busleitung eine Last dar, die auch zu einer Störung des Wellenwiderstandes der Busleitung führt. Es entsteht eine Wellenwiderstandsfehlanpassung, die mit der Länge der mittels des Kopplers an die Busleitung anzuschließenden Abzweigleitung zunimmt.

Insbesondere dann, wenn an die Busleitung eine Vielzahl derartiger Datenbuskoppler angeschlossen ist, können die daraus resultierende Gesamt-Last und die daraus resultierende Gesamt-Wellenwiderstandsfehlanpassung zu einer erheblichen Beeinträchtigung des elektrischen Verhaltens des Busleitungssystems führen.

Die Verbindung der Busleitung mit den Koppelwiderständen 29, 31 des Datenbuskopplers kann innerhalb des Gehäuses 11 erfolgen oder mittels der bereits erwähnten Datenbusverbinder 19 und 21.

Es ist an sich erwünscht, bereits beim Aufbau des Busleitungssystems, beispielsweise bei der Herstellung eines Flugzeugs, eine möglichst große Anzahl von Reservekopplern in das Datenbussystem einzufügen, mittels welchen zu späteren Zeitpunkten zusätzliche Endgeräte an das Datenbussystem angeschlossen werden können, die zunächst nicht erforderlich sind oder deren Notwendigkeit zunächst noch nicht bekannt ist. Um die Gesamt-Last und die Gesamt-Wellenwiderstandsfehlanpassung für das Busleitungssystem aber so klein wie möglich zu halten, vermeidet man es, das Busleitungssystem mit mehr Reservekopplern auszurüsten als (zunächst) unbedingt erforderlich erscheint. Zu dieser Minimallösung führt auch die Überlegung, daß für jeden Reservekoppler ein Übertrager erforderlich ist und ein mit vielen Reservekopplern ausgerüstetes Busleitungssystem entsprechend viele ungenutzte Übertrager enthalten muß.

Mit der vorliegenden Erfindung sollen solche Nachteile überwunden werden.

Dies gelingt mit einem Leitungskoppler gemäß der Erfindung, wie er im Anspruch 1 angegeben ist, bei welchem zwar die Koppelelemente fest mit den beiden Leitungsadern verbunden sind, bei welchem jedoch die beiden Primärwicklungsanschlüsse mit den beiden Koppelelementen über eine lösbare Steckverbindung miteinander verbindbar sind.

Die Erfindung macht außerdem eine mit mindestens einem solchen Leitungskoppler ausgerüstete Signalübertragungsleitung verfügbar.

Ein wichtiger Aspekt der Erfindung ist es, die Trennstelle in Form einer Steckverbindung zwischen der Primärspule des Übertragers und den Koppelelementen anzuordnen und nicht zwischen den Leitungsadern und den Koppelelementen. Die Maßnahme, die Koppelelemente zwischen der Steckverbindung und den Leitungsadern anzuordnen, verhindert ein Kurzschließen der beiden Leitungsadern dann, wenn die mit den beiden Koppelelementen verbundenen beiden Kontakte des Steckverbinders aus irgend einem Grund, beispielsweise versehentlich, kurzgeschlossen werden. Findet eine derartige kurzschließende Überbrückung dieser beiden Kontakte des Steckverbinders statt, sind die beiden Leitungsadern durch die Koppelelemente vor einem direkten Kurzschluß geschützt.

Aufgrund der Maßnahme, bei dem erfindungsgemäßen Leitungskoppler zwischen den Koppelelementen und der Primärwicklung des Übertragers eine Steckverbindung vorzusehen, kann man diesen Leitungskoppler als aus zwei Kopplerhälften zusammengesetzt bezeichnen. Eine erste Kopplerhälfte umfaßt die Leitung und die Koppelelemente. Die zweite Kopplerhälfte umfaßt den Übertrager. An Koppelstellen, die zunächst nur als Reservekoppelstellen vorgesehen sind, ist die Leitung mit der ersten Kopplerhälfte versehen. Die zweite Kopplerhälfte ist an diesen Reservekoppelstellen nicht vorhanden. An diesen Reservekopplerstellen sind die von den Leitungsadern abliegenden Enden der Koppelelemente somit offen. Die Koppelelemente sind daher fünktionslos und haben keine Änderung des Wellenwiderstandes der Leitung zur Folge. An diesen Reservekopplerstellen besteht, da die Koppelelemente an ihrer einen Seite offen bleiben, auch keine Belastung der Leitung.

Da an den Reservekoppelstellen die die Übertrager umfassenden zweiten Kopplerhälften nicht angeschlossen sind, spart man sich die Bestückung des Leitungssystems mit Übertragern an Stellen, an denen man sie nicht braucht. Dies bringt Kostenvorteile mit sich, weil nur die echten Koppelstellen mit Übertragern bestückt sind. Dies kann dann, wenn beispielsweise in einem Flugzeug viele Reservekoppelstellen vorgesehen sind, die zunächst nicht genutzt werden, auch einen Vorteil unter dem Gesichtspunkt der Gewichteinsparung mit sich bringen, da Übertrager vergleichsweise schwere Schaltungskomponenten sind.

In den meisten Fällen wird man den Leitungskoppler in einem elektrisch abschirmenden Gehäuse unterbringen. Für diesen Fall sieht die Erfindung für jede Kopplerhälfte ein separates abschirmendes Gehäuse vor, wobei die erste Kopplerhälfte mit der Leitung und den Koppelelementen in einem ersten abschirmenden Gehäuse und die zweite Kopplerhälfte mit dem Übertrager in einem zweiten abschirmenden Gehäuse untergebracht ist. Die beiden Gehäuse sind mit je einem Verbinder der zwischen den Koppelelementen und der Primärwicklung des Übertragers vorgesehenen Verbinderanordnung versehen. Die beiden Gehäuse sind dann vorteilhafterweise über diese Verbinderanordnung elektrisch miteinander verbunden, um die Abschirmwirkung lückenlos über den gesamten Leitungskoppler zu erstrecken.

Man kann in einem Kopplergehäuse mehrere Leitungskoppler unterbringen, beispielsweise bis 32. In diesem Fall sind die Koppelelemente aller Koppel- und Reservekoppelstellen in dem ersten abschirmenden Gehäuse untergebracht. Die Übertrager der zweiten Kopplerhälften sind in je einem separaten zweiten Gehäuse untergebracht. Am ersten Kopplergehäuse sind so viele Verbinder wie Koppelstellen vorgesehen.

Innerhalb des ersten abschirmenden Gehäuses kann die Leitung mittels ein oder zwei wellenwiderstandsangepaßten Widerständen abgeschlossen werden.

Bei einer Ausführungsform der Erfindung sind die Koppelelemente je durch einen elektrischen Widerstand gebildet.

Bei Zugrundelegung des genannten MIL-Standards weisen die Koppelwiderstände je einen Widerstandswert von 0,75 Z₀ auf, bei einem Wellenwiderstand Z₀ = 78Ω, und hat der Übertrager ein Primärseiten-Sekundärseiten-Übersetzungsverhältnis von 1:√2.

Bei einer anderen Ausführungsform der Erfindung weisen die Koppelelemente je zwei antiparallel geschaltete Zenerdioden auf. Daher kommt es zu einer Spannungsübertragung von einer Leitung über die beiden Zenerdioden und die Primärseite des Übertragers zur anderen Leitung erst oberhalb eines Spannungswertes gleich der Summe der Zenerspannungen der beiden Zenerdioden. Somit ist Schutz vor einem direkten Kurzschluß zwischen den beiden Leitungen über die Primärseite des Übertragers gegeben.

Vorzugsweise ist bei dieser Ausführungsform jeder der beiden antiparallel geschalteten Zenerdioden eine Diode in Reihe geschaltet, wobei sich die eine Zenerdiode mit der ihr zugeordneten Diode in einer Kathode-zu-Kathode-Verbindung und sich die andere Zenerdiode mit der ihr zugeordneten Diode in einer Anode-zu-Anode-Verbindung befindet. Damit wird verhindert, daß die Spannung einer aufgeladenen Sperrschichtkapazität einer beteiligten Zenerdiode auf eine Signalleitung des Leitungskopplers gelangt.

Die Erfindung wird nun anhand von Ausführungsformen näher erläutert.

In den beiliegenden Figuren zeigen:
- Figur 1: ein schematisches Schaltbild einer ersten Ausführungsform eines erfindungsgemäßen Datenbuskopplers;
- Figur 2: ein schematisches Schaltbild einer zweiten Ausführungsform eines erfindungsgemäßen Datenbuskopplers; und
- Figur 3: ein schematisches Schaltbild des bereits erläuterten Datenbuskopplers bekannter Art.

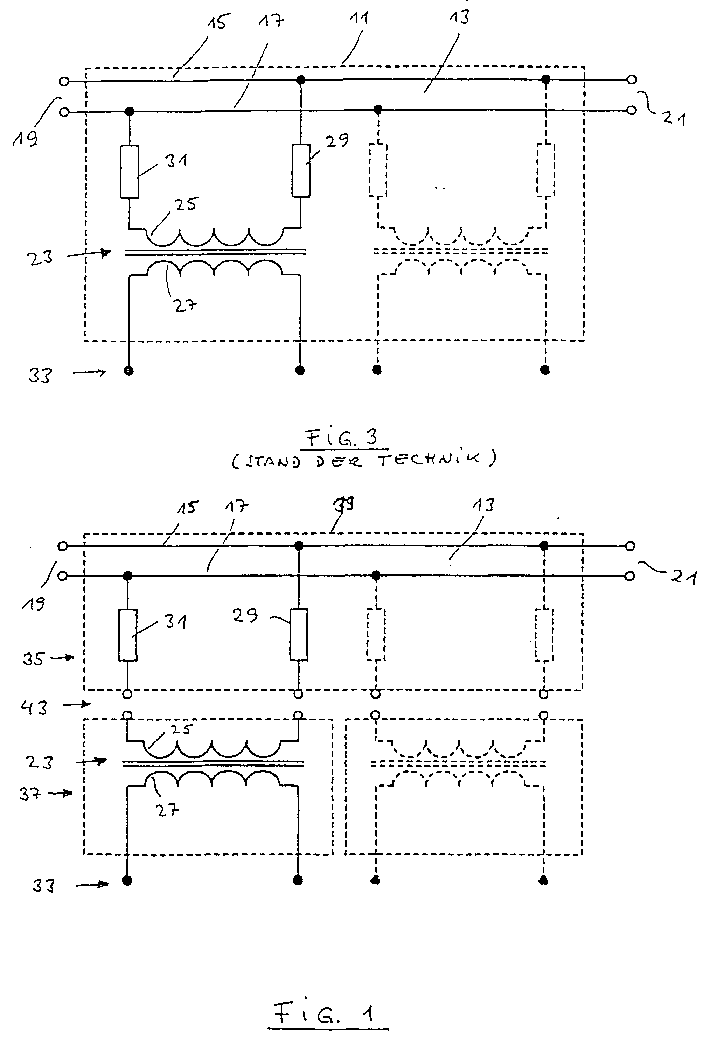

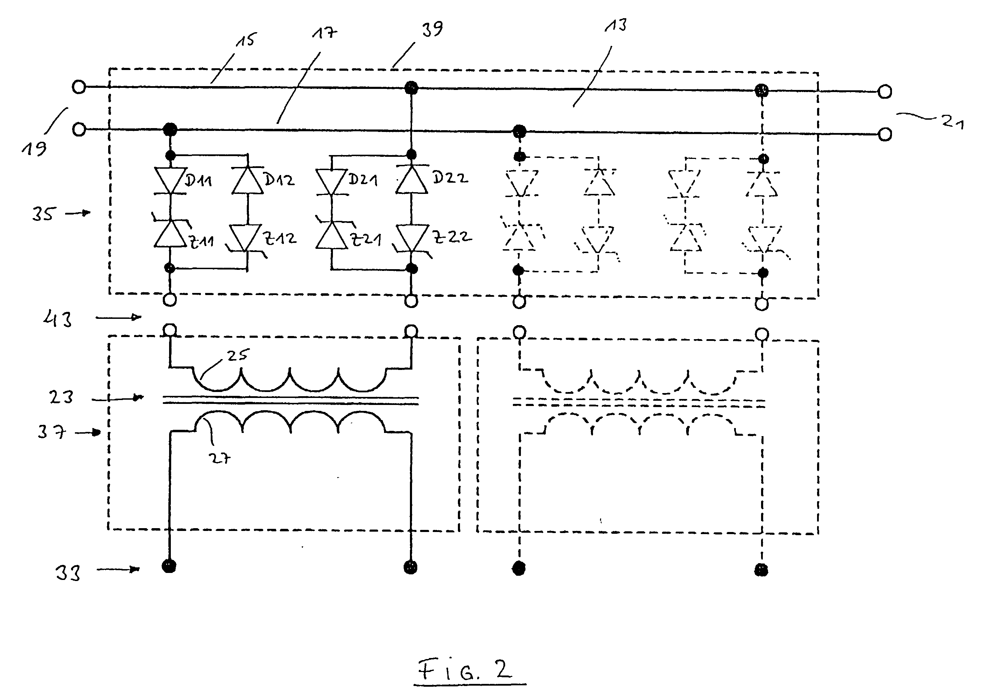

In den Figuren 1 und 2 sind Schaltungskomponenten, die mit Schaltungskomponenten des in Figur 3 gezeigten bekannten Datenbuskopplers übereinstimmen, mit gleichen Bezugszeichen gekennzeichnet und werden im Zusammenhang mit dem erfindungsgemäßen Datenbuskopplern gemäß Figuren 1 und 2 nicht nochmals erläutert. Insofern wird auf die vorausgehenden Erläuterungen zur Figur 3 Bezug genommen.

Figur 1 zeigt eine erste Ausführungsform eines erfindungsgemäßen Datenbuskopplers, dessen Koppelelemente durch ohmsche Widerstände 29 und 31 gebildet sind. Die Abweichung der in Figur 1 gezeigten Ausführungsform eines erfindungsgemäßen Datenbuskopplers von dem bekannten Datenbuskoppler nach Figur 3 besteht darin, jeden Datenbuskoppler in eine erste Kopplerhälfte 35 und eine zweite Kopplerhälfte 37 zu unterteilen. Die erste Kopplerhälfte 35 umfaßt das Busleitungsstück 13 mit den Busleitungsadern 15 und 17 und die Koppelwiderstände 29 und 31. Die zweite Kopplerhälfte 37 umfaßt den Übertrager 23 mit der Primärwicklung 25 und der Sekundärwicklung 27. Beide Kopplerhälften 35 und 37 sind in getrennten abschirmenden Gehäusen untergebracht, die erste Kopplerhälfte 35 in einem ersten Gehäuse 39 und die zweite Kopplerhälfte 37 in einem zweiten Gehäuse 41. Zwischen den beiden Kopplerhälften 35 und 37 befindet sich eine (in Figur 1 nur angedeutete) Verbinderanordnung 43, über welche die beiden Kopplerhälften 35 und 37 in lösbarer Weise miteinander verbindbar sind. Dabei befindet sich an jedem der beiden Gehäuse 39 und 41 je einer der beiden Verbinder, welche die Verbinderanordnung 43 bilden. Die Verbinder der Verbinderanordnung 43 bilden somit die Schnittstelle zwischen den beiden Kopplerhälften 35 und 37. Die mittels des Abzweigleitungsverbinders 33 an die Sekundärwicklung 27 des Übertragers 25 anschließbare Abzweigleitung kann ein Twinaxialkabel oder ein Triaxialkabel sein. Der Typ des Abzweigleitungsverbinders 33 hängt von dem für die Abzweigleitung verwendeten Kabeltyp ab. Beispielsweise wird ein Triaxial-Steckverbinder verwendet, bei dem es sich um einen Koaxial-Steckverbinder mit zusätzlichem Außenschirm handelt.

Die gleichen Überlegungen gelten hinsichtlich der Busleitung und damit hinsichtich des Busleitungsstücks 13 des Datenbuskopplers und der Datenbusverbinder 19 und 21.

Für die Verbinderanordnung 42 kann jeglicher Verbindertyp benutzt werden, mit dem sich in geeigneter Weise einerseits die beiden Koppelwiderstände 29 und 31 mit den beiden Anschlüssen der Primärspule 25 des Übertragers 23 und andererseits die beiden abschirmenden Gehäuse 39 und 41 elektrisch miteinander verbinden lassen.

Bei der in Figur 1 gezeigten Ausführungsform der Erfindung können in dem ersten Gehäuse 39 mehrere Kopplerhälften untergebracht sein. An das erste Gehäuse 39 sind dann mit einer entsprechenden Anzahl Verbinderanordnungen 43 entsprechend viele zweite Gehäuse 41 mit je einem Übertrager 23 anschließbar. Dies ist in Figur 1 dadurch die gestrichelten Kopplerhälften eines zweiten Datenbuskopplers angedeutet.

Vorausgehend wurde davon ausgegangen, daß die Verbindung des Busleitungsstücks 13 mit der Busleitung des Busleitungssystems und die Verbindung der zweiten Kopplerhälfte 37 mit der Abzweigleitung über je einen Steckverbinder erfolgen. Es besteht aber auch die Möglichkeit, mindestens einen Teil der Verbinder 19, 21 und 33 wegzulassen und die Busleitung ohne Unterbrechung durch das erste Gehäuse 39 hindurchzuführen bzw. die Abzweigleitung fest mit den beiden Anschlüssen der Sekundärwicklung 27 des Übertragers 23 zu verbinden.

Die Abzweigleitungen werden durch Kabelstücke gebildet, deren Länge von der Entfernung der einzelnen Datenendstelle von der Busleitung abhängt und beispielsweise etwa 10 m betragen kann. Solche Datenendstellen sind beispielsweise Computer, Mikrocomputer oder Prozessoren, die über das Busleitungssystem zu einem LAN-System (Local Area Network, d.h. Nahbereichsnetzwerk) zusammengefaßt sind.

Figur 2 zeigt eine zweite Ausführungsform eines erfindungsgemäßen Datenbuskopplers, dessen Koppelelemente je durch ein mit Dioden und Zenerdioden aufgebautes Koppelnetzwerk gebildet sind. Ansonsten stimmt die zweite Ausführungsform mit der ersten Ausführungsform überein.

Jedes dieser Koppelnetzwerke besteht aus einer Parallelschaltung zweier Reihenschaltungen aus je einer Diode und einer Zenerdiode. Bei dem in Figur 3 mit durchgezogenen Linien dargestellten Datenbuskoppler weist das mit der Leitung 17 verbundene Koppelnetzwerk in einem linken Schaltungszweig eine Reihenschaltung aus einer Diode D11 und einer Zenerdiode Z11 und in einem rechten Schaltungszweig eine Reihenschaltung aus einer Diode D12 und einer Zenerdiode Z12 auf. Die beiden Zenerdioden Z11 und Z12 sind antiparallel zueinander geschaltet, d.h., Z11 weist mit der Kathode zur Leitung 17 während die Kathode von Z12 zur Verbindereinrichtung 43 weist. Die beiden Dioden D11 und D12 sind antiparallel zueinander und antiseriell zu der je zugehörigen Zenerdiode Z11 bzw. Z12 geschaltet. D.h., von D11 weist die Anode zur Leitung 17, während von D12 die Kathode zur Leitung 17 weist, und im linken Schaltungszweig haben D11 und Z11 eine Kathode-zu-Kathode-Verbindung miteinander, während im rechten Schaltungszweig D12 und Z12 eine Anode-zu-Anode-Verbindung miteinander haben.

Das mit der Leitung 15 verbundene Koppelnetzwerk ist identisch aufgebaut mit einer Diode D21 und einer Zenerdiode Z21 im linken Schaltungszweig und einer Diode D22 und einer Zenerdiode Z22 im rechten Schaltungszweig.

Nimmt man beispielsweise einmal an, daß die Zenerdioden je eine Zenerspannung von 3,4 V haben, werden über die Primärseite des Übertragers 23 zwischen den beiden Leitungen 15 und 17 nur Spannungen mit Spannungswerten oberhalb 6,8 V übertragen. Ein direkter Kurzschluß zwischen den beiden Leitungen 15 und 17 über den Übertrager 23 ist somit verhindert.

Durch eine technisch wenig aufwendige Maßnahme, nämlich die Steckverbindung zwischen den Koppelelementen 29 und 31 bzw. D11 bis D22 und Z11 bis Z22 einerseits und dem Übertrager 23 andererseits, ist eine bedeutungsvolle Verbesserung geschaffen worden. An Reservekoppelstellen, an welche zunächst keine Abzweigleitung angeschlossen ist, wird für die Datenbusleitung weder eine Last noch eine Wellenwiderstandsbeeinträchtigung geschaffen. Außerdem ist nicht eine Bestückung mit Übertragern erforderlich, die zunächst noch gar nicht benötigt werden.

## Patentansprüche

1. Leitungskoppler, insbesondere Datenbuskoppler, zum Ankoppeln einer Abzweigleitung mit zwei Abzweigleitungsadern an eine Leitung (13) mit zwei Leitungsadern (15,17),
mit einem Übertrager (23) mit einer zwei Primärwicklungsanschlüsse aufweisenden Primärwicklung (25) und einer zwei Sekundärwicklungsanschlüsse aufweisenden Sekundärwicklung (27),
wobei die Primärwicklungsanschlüsse je über ein Koppelelement (29,31;D11-D22,Z11-Z22) mit einer der beiden Leitungsadern (15,17) und die beiden Sekundärwicklungsanschlüsse je mit einer der beiden Abzweigleitungsadern gekoppelt sind,
**gekennzeichnet durch** eine zwischen den Koppelelementen (29,31 ;D11-D22,Z11-Z22) und den Primärwicklungsanschlüssen angeordnete Verbindereinrichtung (43) zum lösbaren Verbinden des Übertragers (23) mit den Koppelelementen (29,31;D11-D22,Z11-Z22).

2. Leitungskoppler nach Anspruch 1, **dadurch gekennzeichnet, daß** die Leitung (13) und die Koppelelemente (29,31;D11-D22,Z11-Z22) in einem ersten elektrisch abschirmenden Gehäuse (39) und der Übertrager (23) in einem zweiten elektrisch abschirmenden Gehäuse (41) untergebracht und die beiden Gehäuse (39,41) über die Verbindereinrichtung (43) elektrisch miteinander koppelbar sind.

3. Leitungskoppler nach Anspruch 1 oder 2, **dadurch gekennzeichnet, daß** das erste Gehäuse (39) mit Leitungsverbindern (19,21) versehen ist, über welche ein in dem ersten Gehäuse (39) befindliches internes Leitungsstück (13) in lösbarer Weise seriell zwischen außerhalb des ersten Gehäuses (39) befindliche externe Leiter schaltbar ist.

4. Leitungskoppler nach einem der Ansprüche 1 bis 3, **dadurch gekennzeichnet, daß** das zweite Gehäuse (41) einen Abzweigleitungsverbinder (33) aufweist, über den die Abzweigleitung in lösbarer Weise mit den Sekundärwicklungsanschlüssen des Übertragers (23) verbindbar ist.

5. Leitungskoppler nach einem der Ansprüche 1 bis 4, **dadurch gekennzeichnet, daß** der Leitungskoppler mindestens einen Wellenwiderstandsabschluß in Form eines die beiden Leitungsadern (15,17) überbrückenden Widerstandes mit einem dem Wellenwiderstand der Leitung entsprechenden Widerstandswert aufweist.

6. Leitungskoppler nach einem der Ansprüche 1 bis 5, **dadurch gekennzeichnet, daß** in dem ersten Gehäuse (39) mehrere Koppelstellen mit je einem Paar Koppelelementen (29 und 31) untergebracht sind, die Übertrager (23) für die einzelnen Koppelstellen in je einem separaten zweiten Gehäuse (41) untergebracht sind und das erste Gehäuse (39) pro Koppelstelle je einen Verbinder für eine Verbindereinrichtung (43) aufweist.

7. Leitungskoppler nach einem der Ansprüche 1 bis 6, **dadurch gekennzeichnet, daß** die Koppelelemente je durch einen Widerstand (29,31) gebildet sind.

8. Leitungskoppler nach einem der Ansprüche 1 bis 6, **dadurch gekennzeichnet, daß** die Koppelelemente je zwei antiparallel geschaltete Zenerdioden (Z11,Z12,Z21,Z22) aufweisen.

9. Leitungskoppler nach Anspruch 8, **dadurch gekennzeichnet, daß** in jedem Koppelelement jeder der beiden antiparallel geschalteten Zenerdioden (Z11,Z12,Z21,Z22) eine Diode (D11,D12,D21,D22) in Reihe geschaltet ist, wobei sich die eine Zenerdiode (Z11,Z21) mit der ihr zugeordneten Diode (D11,D21) in einer Kathode-zu-Kathode-Verbindung und sich die andere Zenerdiode (Z12,Z22) mit der ihr zugeordneten Diode (D12,D22) in einer Anode-zu-Anode-Verbindung befindet.

10. Signalübertragungsleitung mit mindestens einem Leitungskoppler nach einem der Ansprüche 1 bis 9.

## Claims

1. A line coupler, in particular a data bus coupler, for coupling a branch line having two branch line wires to a line (13) having two line wires (15, 17), comprising a transformer (23) having a primary winding (25) with two primary winding terminals and a secondary winding (27) with two secondary winding terminals, the primary winding terminals being coupled via one coupling element (29, 31; D11-D22, Z11-Z22) each to one of the two line wires (15, 17), and the two secondary winding terminals being coupled to one of the two branch line wires each,
**characterized by** a connector means (43) arranged between said coupling elements (29, 31; D11-D22, Z11-Z22) and said primary winding terminals for releasably connecting said transformer (23) to said coupling elements (29, 31; D11-D22, Z11-Z22).

2. A line coupler according to claim 1,
**characterized in that** said line (13) and said coupling elements (29, 31; D11-D22, Z11-Z22) are accommodated in a first electrically shielding housing (39) and said transformer (23) is accommodated in a second electrically shielding housing (41), and the two housings (39, 41) are adapted to be electrically coupled with each other via said connector means (43).

3. A line coupler according to claim 1 or 2,
**characterized in that** said first housing (39) is provided with line connectors (19, 21) through which an internal line piece (13) located in said first housing (39) is adapted to be releasably connected in serial manner between external conductors located outside of said first housing (39).

4. A line coupler according to any of claims 1 to 3,
**characterized in that** the second housing (41) comprises a branch line connector (33) through which said branch line is adapted to be releasably connected to the secondary winding terminals of transformer (23).

5. A line coupler according to any of claims 1 to 4,
**characterized in that** the line coupler comprises at least one characteristic impedance termination in the form of a resistor bridging the two line wires (15, 17), having a resistance corresponding to the resistance of the line.

6. A line coupler according to any of claims 1 to 5,
**characterized in that** the first housing (39) has a plurality of coupling sites with one pair of coupling elements (29 and 31) each accommodated therein, the transformers (23) for the individual coupling sites are each accommodated in a separate second housing (41), and the first housing (39) has for each coupling site one connector each for a connector means (43).

7. A line coupler according to claim 8,
**characterized in that** the coupling elements are formed by one resistor (29, 31) each.

8. A line coupler according to any of claims 1 to 6,
**characterized in that** the coupling elements comprise two antiparallel connected Zener diodes (Z11, Z12, Z21, Z22) each.

9. A line coupler according to claim 8,
**characterized in that** in each coupling element, each of the two antiparallel connected Zener diodes (Z11, Z12, Z21, Z22) has a diode (D11, D12, D21, D22) connected in series therewith, one Zener diode (Z11, Z21) being arranged with its associated diode (D11, D21) in a cathode-to-cathode connection, and the other Zener diode (Z12, Z22) being arranged with its associated diode (D12, D22) in an anode-to-anode connection.

10. A signal transmission line comprising at least one line coupler according to any of claims 1 to 9.

## Revendications

1. Coupleur de ligne, en particulier coupleur de bus de données, en vue du couplage d'une ligne de dérivation comprenant deux brins de ligne de dérivation à une ligne (13) comprenant deux brins de ligne (15, 17),
équipé d'un transformateur (23) avec un enroulement primaire (25) présentant deux bornes d'enroulement primaire et d'un enroulement secondaire (27) comprenant deux bornes d'enroulement secondaire, les bornes d'enroulement primaire étant couplées chacune par l'intermédiaire d'un élément de couplage (29, 31 ; D11-D22, Z11-Z22) avec l'un des deux brins de ligne (15, 17) et les deux bornes d'enroulement secondaire étant couplées chacune à l'un des deux brins de ligne de dérivation,
**caractérisé par** un dispositif de connexion (43) disposé entre les éléments de couplage (29, 31 ; D11-D22, Z11-Z22) et les bornes d'enroulement primaire en vue de la liaison amovible du transformateur (23) avec les éléments de couplage (29, 31 ; D11-D22, Z11-Z22).

2. Coupleur de ligne selon la revendication 1, **caractérisé en ce que** la ligne (13) et les éléments de couplage (29, 31 ; D11-D22, Z11-Z22) sont disposés dans un premier boîtier (39) de blindage électrique et le transformateur (23) dans un second boîtier (41) de blindage électrique et les deux boîtiers (39, 41) pouvant être couplés électriquement l'un à l'autre par l'intermédiaire du dispositif de connexion (43).

3. Coupleur de ligne selon la revendication 1 ou 2, **caractérisé en ce que** le premier boîtier (39) est muni de connecteurs de ligne (19, 21), par l'intermédiaire desquels un tronçon de ligne (13) interne se trouvant dans le premier boîtier (39) peut être monté de façon amovible en série entre des conducteurs extérieurs se trouvant à l'extérieur du premier boîtier (39).

4. Coupleur de ligne selon l'une des revendications 1 à 3, **caractérisé en ce que** le second boîtier (41) présente un connecteur de ligne de dérivation (33), par l'intermédiaire duquel la ligne de dérivation peut être réunie de façon amovible aux bornes d'enroulement secondaire du transformateur (23).

5. Coupleur de ligne selon une des revendications 1 à 4, **caractérisé en ce que** le coupleur de ligne présente au moins une terminaison d'impédance caractéristique sous la forme d'une résistance shuntant les deux brins de ligne (15, 17) avec une valeur de résistance correspondant à l'impédance caractéristique de la ligne.

6. Coupleur de ligne selon une des revendications 1 à 5, **caractérisé en ce que** plusieurs points de couplage dans le premier boîtier (39) sont disposés avec chacun une paire d'éléments de couplage (29 et 31), les transformateurs (23) pour les différents points de couplage sont disposés chacun dans un second boîtier distinct (41) et le premier boîtier (39) présente pour chaque point de couplage un connecteur pour un dispositif de connexion (43).

7. Coupleur de ligne selon une des revendications 1 à 6, **caractérisé en ce que** les éléments de couplage sont formés chacun par une résistance (29, 31).

8. Coupleur de ligne selon une des revendications 1 à 6, **caractérisé en ce que** les éléments de couplage comportent chacun deux diodes Zener montées en antiparallèle (Z11, Z12, Z21, Z22).

9. Coupleur de ligne selon la revendication 8, **caractérisé en ce que** dans chaque élément de couplage chacune des deux diodes Zener montées en antiparallèle (Z11, Z12, Z21, Z22) est montée en série une diode (D11, D12, D21, D22), la première diode Zener (Z11, Z21) se trouvant avec la diode (D11, D21) qui lui est associée en liaison cathode-cathode et l'autre diode Zener (Z12, Z22) se trouvant avec la diode qui lui est associée (D12, D22) en liaison anode-anode.

10. Ligne de transmission de signal équipée d'au moins un coupleur de ligne selon une des revendications 1 à 9.
